# EUROPEAN PATENT SPECIFICATION

(11) **EP 2 357 365 B1**
(45) Date of publication and mention of the grant of the patent: **16.11.2016**
(21) Application number: 11152931.9
(22) Date of filing: 01.02.2011
(51) Int. Cl.: F04D 25/08, F04D 27/00, F04D 27/02, F24F 11/00, F24F 12/00, G01F 1/34

(54) **Air movement system**
Luftzirkulationssystem
Système de mouvement d'air

(30) Priority: 01.02.2010 EP 10152302
(43) Date of publication of application: 17.08.2011
(73) Proprietor: Brink Climate Systems B.V., 7951 DA Staphorst (NL)
(72) Inventor: Hanewald, Rudolf, 7944 PH l, Meppel (NL)
(74) Representative: Nederlandsch Octrooibureau

(56) References cited:
- EP-A1- 1 722 170
- EP-A1- 1 990 545
- EP-A1- 2 093 428
- EP-A1- 2 113 726
- EP-A2- 0 410 271
- EP-A2- 0 843 101
- WO-A1-2005/036065
- WO-A2-2004/072455
- GB-A- 227 626
- GB-A- 2 451 303
- US-A- 5 129 264
- US-A- 5 586 861

## Description

### TECHNICAL FIELD OF THE INVENTION

The invention relates to an air movement system as defined in the preamble of claim 1. Such a system is known eg from US 5 586 861. Such system can be used in a ventilation system for a building, in particular a utility building or a residential building, comprising the centrifugal fan unit.

### BACKGROUND OF THE INVENTION

Ventilation systems in many commercial settings are required, either by regulations or by functional specifications, to have a certain minimum flow rates. For example, in commercial buildings, a minimum level of air flow is required to maintain a healthy air quality within the building. Similarly, in other applications, such as clean rooms, a certain level of air flow must be maintained to allow adequate filtration and removal of airborne particulates.

To ensure that the air flow requirements for a particular system are met, it is advantageous to be able to precisely measure the rate of air flow through the system. Systems without precise flow measuring capability are frequently overdesigned to have excess capacity, and are frequently operated at excess levels to ensure compliance with operating specifications. This adds unnecessarily to the expense of both the systems and their operation.

In addition, filters used in some systems can become clogged with particulates, making them more resistant to air flow over time. This increased resistance may cause the air flow of the system to drop below acceptable levels unless it is precisely monitored and steps are taken to compensate for the increased resistance.

Unfortunately, many methods of measuring air flow in a ventilation system can dramatically decrease the efficiency of the system. The efficiency of a ventilation system is a measure of how readily air flows through the system or, conversely, the system's resistance to air flow. Each component of a system through which air flows presents a certain amount of resistance to air flow. This resistance is determined by the size and shape of the component, and by the nature of any obstacles or surfaces over which the air flows. Generally, components that are wider, smoother, straighter and shorter have less resistance to air flow, and therefore provide a more efficient system.

In order to provide an efficient air movement system, many measuring systems were engineered using all sorts of ventilator devices and combining these with various types of pressure measuring devices.

An example of such a system is disclosed in US5586861, which discloses a centrifugal fan unit having two pressure taps at specific locations to measure the static pressure in order to determine pressure difference. An air flow measuring system can detect small changes in the air flow volume rate. A controller monitors the pressure difference across a flared inlet cone, calculates a flow rate based on the characteristics of the cone, and adjusts the fan speed to maintain a desired air flow. To provide an air movement system, the centrifugal fan unit is build into a housing in an uneconomical way. In fact, air flow in axially, leaves the centrifugal fan unit radially to enter a chamber which has an outlet axially and in line with the inlet.

WO2004/072455 discloses a common ventilator with an airflow restriction and having one pressure sensor at the narrowest part of the restriction and a further pressure sensor at a position that is not further defined but to be "to the opposite".

Many other documents disclose measurements systems for controlling the flow of air produced by a fan. An example of such a document is GB2457534. WO 2005/036065 shows the same type of ventilator for ventilating an indoor space and having a heat exchanger. Again, setting such a unit to deliver a constant flow independent of its used and external resistance is a problem. In some systems, the motor speed of a fan unit or ventilator is controlled. This, however, does not provide a constant flow of air.

US 5.129.264 discloses in general a centrifugal pump for fluids and having several pressure sensors at different locations in the annular or spiral housing of the centrifugal pump. No reference is made to an air movement system.

In EP2093428 a simple fan assembly is disclosed having a fan assembly and a multitude of pressure sensors at various locations upstream and downstream of the fan assembly. This again does not provide an accurate flow.

GB 2451303 discloses a heat exchanging ventilator having a control unit which controls the speed of the ventilator motor unit. Such a unit is well known in the art. The flow rate, however, proved not to be constant enough. In particular when the resistance of the inlet and outlet system varies or the units are used for different duct systems and air treatment systems, it proved difficult to set and maintain a constant flow.

EP 2113726 discloses a ventilating arrangement a casing with fan members with impellers inside the housing for creating an air flow and a heat exchanger inside the housing. According to that application, the fan members are designed to be able to obtain a certain flow rate. The application does not explained how a flow rate is set or maintained.

Experiments showed that the flow rate and the control of the flow rate in such air movement systems can be improved.

### SUMMARY OF THE INVENTION

The object of the invention is to provide an improved air movement system, which air flow rate through is centrifugal fan unit is not dependent on the load or resistance of the air movement system before and after the centrifugal fan unit.

According to the invention, this object is achieved by an air movement system having the features of Claim 1.

The centrifugal fan unit, in particular with blades that are cured backward with respect to the rotational direction of the fan, proved highly efficient in a ventilation system. In order to provide a constant flow, even after passing of time which usually influences the air resistance of the system and the inlet and outlet ducts, the constant flow can be maintained.

Advantageous embodiments and further ways of carrying out the invention may be attained by the measure mentioned in the dependent claims. In particular, the positioning of pressure determining means such as said pressure taps can be critical.

The air movement system is in particular useful in buildings like residential buildings and small utility buildings. In these buildings, the air movement system can be part of a ventilation system, air conditioning system, air heating system, air cooling system, air filtering system, or a combination of any one or more of these systems. The air movement system is in particular useful for a flow rate of about 50-800 m³/hr, in particular about 50-400 m³/hr.

In particular, it was found that the flow rate of the air movement system could be controlled independent of the amount of resistance in the inlet or outlet, and independent if the resistance (filter, heat exchanger, etcetera) was placed before the inlet or before the outlet. In particular, it was found that proper placement of pressure sensors made it possible to economically use a centrifugal pump in an air movement system.

In an embodiment, the inlet piece comprises an inlet piece part made of polymer material, for instance EPS (expanded polystyrene), in an embodiment connecting to the inlet part of the centrifugal fan unit house. The EPS can for instance enclose the housing of the centrifugal fan unit and define the inlet piece part.

The centrifugal fan unit has its outlet duct coupled to a further tube or pipe. or in use. The outlet may have little additional air resistance. In a centrifugal pump, a centrifugal fan is provided inside an annular housing or spiral housing, sometimes referred to as "snail house". The outlet of a centrifugal pump is tangential with respect to the fan. The air inlet of a centrifugal pump is axial with respect to the fan. Usually, it is coaxial with the rotational axis of the fan.

The inlet piece forms an inlet duct which can have an inlet duct partly formed from for instance an EPS part. In front of this inlet duct, usually a resistance increasing unit is provided. An example of such a resistance increasing unit is a heat exchanger, but it can also comprise an air filter, or a heating or cooling unit.

In an embodiment, an air movement system can comprise two centrifugal fan units. In particular in an embodiment, the two centrifugal fan units each are part of a centrifugal pump. These two units may be operationally coupled to one control unit.

Further embodiments are described in the dependent claims and in the drawings.

Other features and advantages of the invention will become apparent from the following detailed description, taken in conjunction with the accompanying drawing which illustrate, by way of example, various features of preferred embodiments of the invention.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
Figure 1 shows a perspective view of an embodiment of a centrifugal fan unit according to the invention;
Figure 2 shows a front view of the centrifugal fan unit of figure 1;
Figure 3 shows a top view of figure 1;
Figure 4 shows a side view of figure 1;
Figure 5, shows the cross section indicated in figure 2, and
Figure 6 shows an embodiment of an air movement system including centrifugal fan units.

### DESCRIPTION OF EMBODIMENTS

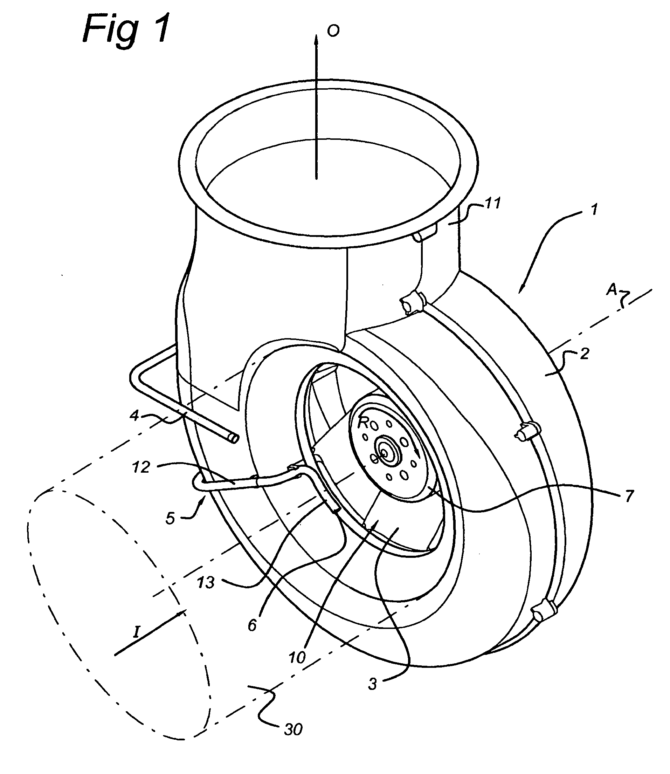

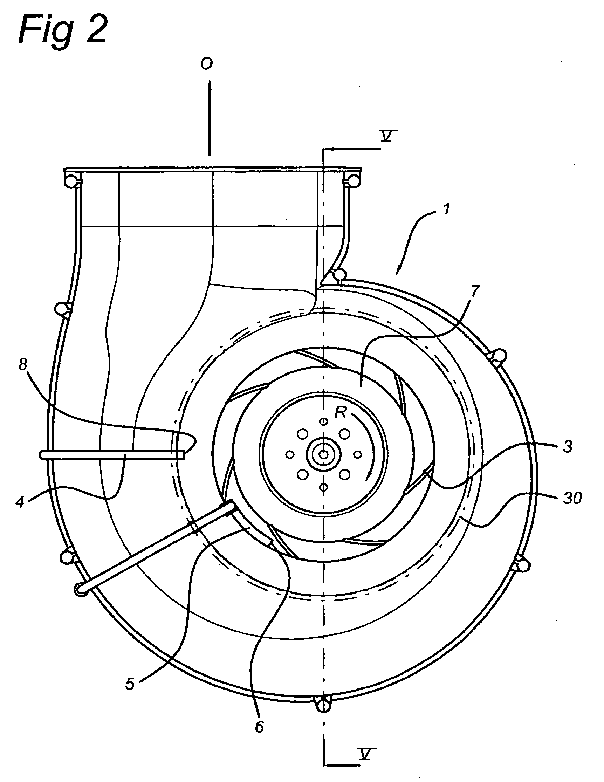

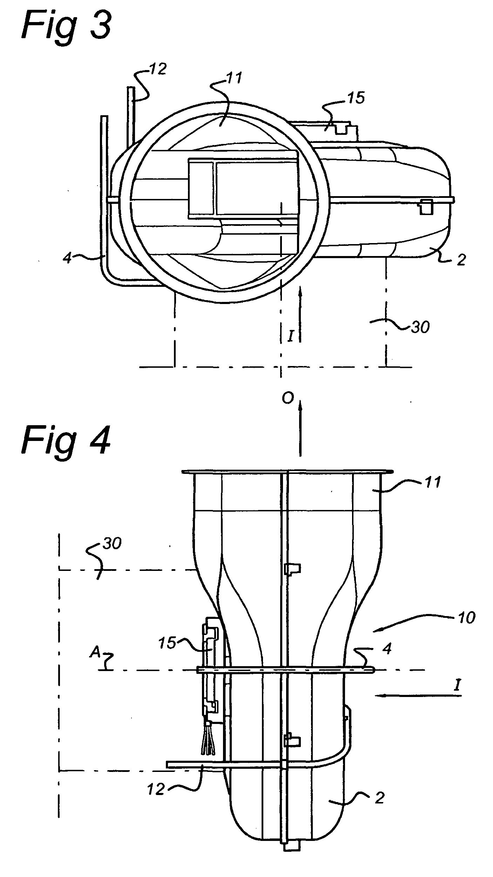

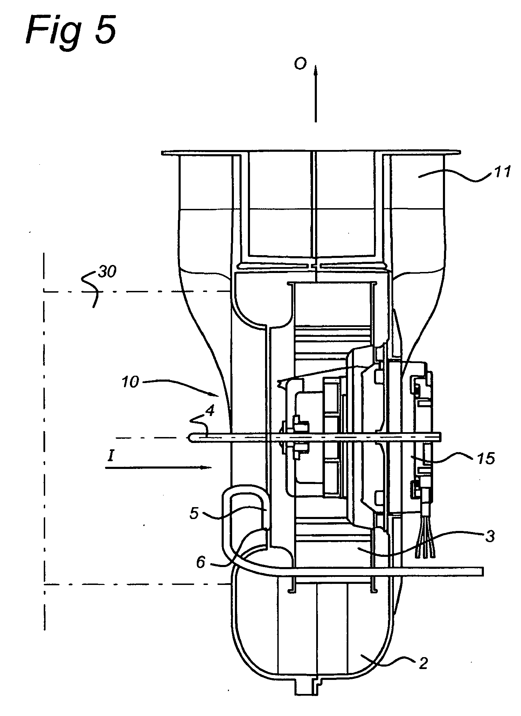

Figure 1 shows perspective view of a centrifugal pump 1 with a centrifugal fan unit and figures 2-4 show several view of this centrifugal pump. Figure 5 shows a cross section as indicated in figure 2. The centrifugal pump 1 has a spiral or annular casing 2. The spiral casing or house 2 defines part of an inlet duct 10. The direction of incoming air is indicated by arrow I. See also figures 3 and 4 to clearly see the direction I of the incoming air. The inlet duct 10 has it smallest cross section next to fan 3. When the fan is in operation, its rotational direction is here clockwise as indicated by arrow R. House 2 further defines an outlet 11. The direction of the outgoing air is indicated by arrow O. See also figures 2 and 4 for a clear indication. The direction of the outgoing air O is perpendicular to the direction of the incoming air I, and perpendicular to the rotational axis A of the fan 3. In fact, the outgoing air is tangential with respect to the fan. In figure 4, the (electric) driving unit 15 for the fan 3 is shown. In figure 1 and 5, schematically a channel wall 30 of an inlet duct is shown.

Figure 2 furthermore shows that the blades of fan 3 are bent backwards with respect to the rotational direction R of fan 3. Thus, the blades are bent away from inlet 6

The centrifugal fan unit further comprises two pressure taps. The first pressure tap 5 provides the pressure at the (downstream) end of the inlet duct just before fan 3. In this embodiment, pressure tap 5 comprises a tube which partially runs along the inlet duct part 10 of house 2. The tube runs radially with respect to the fan 3 in a radial tube part 12 into the inlet duct part 10 and as a bend at the position where the inlet duct part 10 ends, just before the fan 3. There, the tube has a tangential tube part 13. The tangential tube part 13 is slightly curved and partially follows the inner surface of inlet duct part 10. It follows part of the circumferential circle defining the end of inlet duct 10 before fan 3. Usually, this tube part 13 is several centimetres long. The opening 6 of tube part 13 is directed in tangential direction. In particular, in this embodiment the opening 6 has its cross sectional area in one plane with the rotational axis A of fan 3. The opening of the pressure tap in an embodiment is about 0-5 mm away from the fan. Furthermore, it was found that functions without disturbance if the opening is close or as close as possible to the inlet duct wall 30. In an embodiment, it is about 0-5 mm from the inlet duct wall 30.

The second pressure tap 4 provides the pressure upstream from the first pressure tap 5. The position where the pressure is to be used is best indicated in figure 2 in combination with figure 4. Again, a tube enters from radial direction. In use, a further inlet piece or inlet part will be provided which connects to house 2. Thus, tube part 4 will pass the inlet piece wall 30. Thus, the pressure is used from close to the wall of the inlet piece 30. In fact, experiments showed that good results were obtained with the second pressure tap 4 extending about 0-3 mm from inlet piece wall 30. The cross sectional area of opening 8 of the tube 4 is tangent to the inlet duct wall. In a particular embodiment, the longitudinal axis of tube 4 intersects rotational axis A of fan 3.

In use, the pressure difference between pressure tap 5 and pressure tap 4 can be about 0.5 Pa - 800 Pa. In particular, the pressure difference between the first pressure tap 5 and the second pressure tap will be about 0.5 Pa - 300 Pa. The two pressure taps connect to a control unit. The control unit comprises a pressure difference sensor. The pressure difference relates to the flow rate of the centrifugal fan unit 1. The control unit will have a set value for the flow rate, and using the pressure difference, the control unit will regulate the flow rate and keep it constant on the set value. In order to accomplish this, the control unit will set the power of the drive unit of fan 3.

In an embodiment, the pressure taps 4, 5 can be positioned essentially axially in line. The pressure taps 4, 5 can be positioned essentially on a line parallel with respect to the rotational axis of the fan. The line can be close to or in line with the inlet duct or inlet piece wall 30. In an embodiment, the pressure taps 4, 5 are about 2-10 cm apart.

It was found that in order to provide a constant flow rate of air at the outlet duct 11, in particular if the flow rate needs to be in the range of about 50-800 m³/hr, the system of the current invention was in particular suited. Especially, the system is designed for a constant flow rate in the range of about 50-400 m³/hr. In the system, a flow rate can be set, and independent of the ducts this flow rate will be maintained, even after passing of time. In such a flow rate, it was found that the pressure taps 4, 5 can have an opening with a diameter of about 1-2 mm. The openings have an area of about 0.7-3.5 mm².

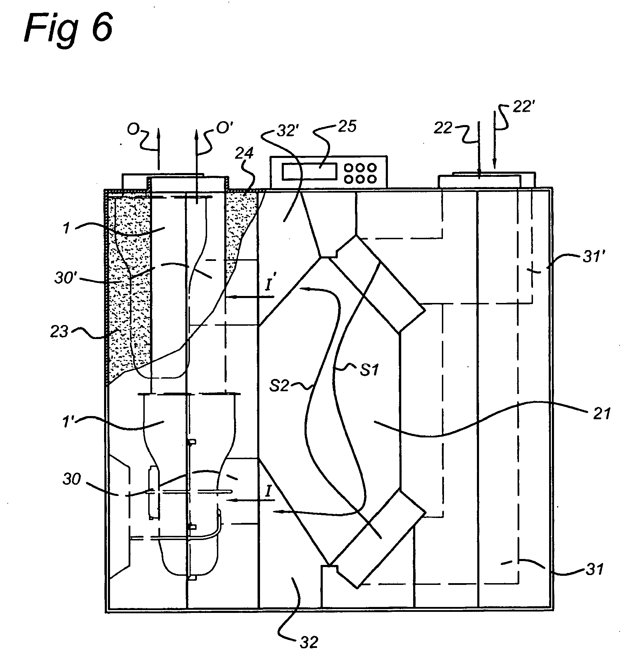

In figure 6, an embodiment of an air movement system is shown having the centrifugal fan units of figure 1. A housing 20 in fact in this embodiment holds two centrifugal fan units 1,1'. Unit 1 has outlet duct O, unit 1' has outlet duct O'. Both units 1, 1' are embedded in EPS units 23 and 24. EPS part 24 provides part of the inlet pieces 30, usually ducts with a circular cross section, for both units 1, 1'. The air movement system further comprises a cross flow heat exchanging unit 21 for providing a first airflow S1 towards the inlet 30 of centrifugal pump 1' and a second airflow S2 towards inlet 30' of centrifugal pump 1 as indicated, and the inflow of air I, I' is indicated. In fact, the outlets of the heat exchanger is exits in chambers 32, 32'. These chambers are coupled to inlets 30 and 30' of the centrifugal pumps 1, 1'. The heat exchanging unit 21 thus has an inlet and outlet for the first airflow S1 and an inlet and outlet for the second airflow S2. Inlet 22 of the air movement system is coupled via duct 31 to the inlet for air flow S2 and Inlet 22' is coupled via duct 31' to air flow S 1. Control unit 25 is coupled to the pressure tubes of both centrifugal pumps 1, 1' and controls the fan speed, usually though provided power, of both units 1, 1' to provided a constant, set flow rate.

In an alternative embodiment, one centrifugal fan unit 1 can be used in a housing in which the unit 1 suspends freely from the outlet duct. The outlet duct is connected to a tube, and the inlet duct draws the air from within the housing which is connected to an inlet tube providing air into the housing.

In the description, the pressure is measured using pressure taps for instance using pressure tubes and a differential pressure sensor. Alternative ways of measuring dynamic and static pressure may be used, measuring the pressure near an inlet duct wall radially in the wall direction at a distance upstream of the fan, and measuring the dynamic pressure near the fan and tangentially in the rotational direction of the fan.

The invention is not limited to the illustrated embodiments. Changes can be made if without departing from the subject-matter of the invention as claimed. In the claims, any reference signs placed between parentheses shall not be construed as limiting the claim. Use of the verb "to comprise" and its conjugations does not exclude the presence of elements or steps other than those stated in a claim.

## Claims

1. An air movement system comprising at least one centrifugal fan unit, wherein the centrifugal unit comprises a centrifugal fan (3) which in operation has a rotational direction (R) and which has blades that are curved backward with respect to said rotational direction (R) of said centrifugal fan (3) and with said centrifugal fan (3) coupled to a drive unit (15), a control unit (25) operationally coupled to said drive unit (15), an inlet piece forming an inlet duct (10) axially, in particular essentially coaxially with a rotational axis (A) of said centrifugal fan (3), to the centrifugal fan unit, which inlet duct (10) has an end facing the centrifugal fan (3), and an outlet duct (11) tangentially to the centrifugal fan unit, wherein the inlet piece is provided with a first pressure tap (5) and a second pressure tap (4), with the second pressure tap (4) positioned at an upstream distance from the end of the inlet duct (10) facing the centrifugal fan (3) and having an opening (8), wherein the control unit (25) is configured to measure a pressure difference between the first and second pressure tap (5, 4) and to control the centrifugal fan (3) in dependence of the measured pressure difference, and wherein the first pressure tap (5) has an opening (6), and wherein said control unit (25) is adapted to maintain a set airflow rate out of said outlet duct (11) based on said measured pressure difference via controlling of the rotational speed of said centrifugal fan (3), **characterized in that**, said opening (8) of said second pressure tab (4) is positioned essentially in a radial direction with respect to the inlet duct (10), and said opening (6) of said first pressure tab (5) is positioned at the end of the inlet duct (10) facing the fan (3) at or near an inlet duct wall and opening in tangential direction with respect to the fan (3).

2. Air movement system according to claim 1, **characterized in that** said first pressure tap (5) comprises a tube (12) reaching in said inlet piece and said opening (6) at the end of the inlet duct facing the fan (3) is at a distance of about 0-5 mm from an inlet duct wall, in particular said tube (12) having an end part that has a shape that corresponds to the profile of the end of the duct facing the fan (3) and ending in said opening, wherein in particular said end part is curved to follow part of the inner circumference of said inlet duct (10), wherein in particular said end part is at least several centimetres and is bent into a further tube part leading out of said inlet duct (10), in particular in radial direction out of said inlet duct, wherein in particular said second pressure tap opening is positioned at a distance of about 0-5 mm from said inlet duct wall.

3. Air movement system according to claim 2, **characterized in that** the tube, in particular said end part of said tube, has its opening in the direction of the rotation direction (R).

4. Air movement system according to claim 2 or 3, wherein the centrifugal fan (3) has a rotation axis (A), **characterized in that** the opening (6) of said first pressure tap (5) has a cross section which is substantially in a plane through the rotation axis (A).

5. Air movement system according to any of the preceding claims, **characterized in that** said inlet duct has a diameter which increases with the distance to said fan (3), such that it flares out away from said fan (3).

6. Air movement system according to any of the preceding claims wherein the centrifugal fan unit or said air movement system further comprises an air filter.

7. Air movement system according to any of the preceding claims further comprising a housing for housing said at least one centrifugal fan unit, in particular said air movement system further comprising a heat exchanging unit in said housing in front of said inlet piece.

8. Air movement system according to claim 7, wherein said housing comprised at least one air inlet and at least one air outlet, said air inlet functionally coupled to said inlet piece and said air outlet functionally coupled to said outlet duct, said housing separating air form said air inlet and said air outlet.

9. Air movement system according to claim 7 or 8, wherein said housing comprises at least two centrifugal fan units in said housing for providing two separated air flows exchanging heat through said heat exchanging unit.

10. Air movement system according to any of the preceding claims, wherein the air movement system is part of a system selected from a ventilation system, air conditioning system, air heating system, air cooling system, air filtering system, and a combination of any one or more of these systems.

## Patentansprüche

1. Luftzirkulationssystem, das wenigstens eine Zentrifugalgebläse-Einheit umfasst, wobei die Zentrifugalgebläse-Einheit ein Zentrifugalgebläse (3) umfasst, das in Funktion eine Drehrichtung (R) hat und das Flügel aufweist, die in Bezug auf die Drehrichtung (R) des Zentrifugalgebläses (3) nach hinten gekrümmt sind und wobei das Zentrifugalgebläse (3) mit einer Antriebs-Einheit (15) gekoppelt ist, eine Steuer-Einheit (25) funktional mit der Antriebs-Einheit (15) gekoppelt ist, ein Einlassteil einen Einlasskanal (10) axial, insbesondere im Wesentlichen koaxial mit einer Drehachse (A) des Zentrifugalgebläses (3), zu der Zentrifugalgebläse-Einheit bildet, wobei der Einlasskanal (10) ein Ende hat, das dem Zentrifugalgebläse (3) zugewandt ist, sowie einen Auslasskanal (11) tangential zu der Zentrifugalgebläse-Einheit, wobei das Einlassteil mit einer ersten Druckanschlussstelle (5) und einer zweiten Druckanschlussstelle (4) versehen ist und die zweite Druckanschlussstelle (4) in einem Abstand stromauf von dem Ende des Einlasskanals (10) positioniert ist, das dem Zentrifugalgebläse (3) zugewandt ist, und eine Öffnung (8) aufweist, und die Steuereinheit (25) so konfiguriert ist, dass sie eine Druckdifferenz zwischen der ersten und der zweiten Druckanschlussstelle (5, 4) misst und das Zentrifugalgebläse (3) in Abhängigkeit von der gemessenen Druckdifferenz steuert, und wobei die erste Druckanschlussstelle (5) eine Öffnung (6) aufweist und die Steuereinheit (25) so eingerichtet ist, dass sie eine vorgegebene Geschwindigkeit des Luftstroms aus dem Auslasskanal (11) auf Basis der gemessenen Druckdifferenz aufrechterhält, indem sie die Drehgeschwindigkeit des Zentrifugalgebläses (3) steuert, **dadurch gekennzeichnet, dass** die Öffnung (8) der zweiten Druckanschlussstelle (4) im Wesentlichen in einer radialen Richtung in Bezug auf den Einlasskanal (10) positioniert ist und die Öffnung (6) der ersten Druckanschlussstelle (5) an dem Ende des Einlasskanals (10), das dem Gebläse (3) zugewandt ist, an oder nahe an einer Einlasskanal-Wand positioniert ist und sich in tangentialer Richtung in Bezug auf das Gebläse (3) öffnet.

2. Luftzirkulationssystem nach Anspruch 1, **dadurch gekennzeichnet, dass** die erste Druckanschlussstelle (5) eine Röhre (12) umfasst, die in das Einlassteil reicht, und sich die Öffnung (6) an dem Ende des Einlasskanals, das dem Gebläse (3) zugewandt ist, in einem Abstand von ungefähr 0-5 mm zu einer Einlasskanal-Wand befindet, wobei die Röhre insbesondere einen Endteil aufweist, der eine Form hat, die dem Profil des Endes des Kanals entspricht, das dem Gebläse (3) zugewandt ist, und in der Öffnung endet, wobei der Endteil insbesondere so gekrümmt ist, dass er einem Teil des Innenumfangs des Einlasskanals (10) folgt, der Endteil insbesondere wenigstens mehrere Zentimeter lang ist und zu einem weiteren Röhrenteil gekrümmt ist, der aus dem Einlasskanal (10) heraus führt, insbesondere in radialer Richtung aus dem Einlasskanal heraus, und wobei die Öffnung der zweiten Druckanschlussstelle insbesondere in einem Abstand von ungefähr 0-5 mm zu der Einlasskanal-Wand positioniert ist.

3. Luftzirkulationssystem nach Anspruch 2, **dadurch gekennzeichnet, dass** die Richtung der Öffnung der Röhre, insbesondere des Endteils der Röhre, der Drehrichtung (R) entspricht.

4. Luftzirkulationssystem nach Anspruch 2 oder 3, wobei das Zentrifugalgebläse (3) eine Drehachse (A) hat, **dadurch gekennzeichnet, dass** die Öffnung (6) der ersten Druckanschlussstelle (5) einen Querschnitt hat, der im Wesentlichen in einer Ebene durch die Drehachse (A) verläuft.

5. Luftzirkulationssystem nach einem der vorangehenden Ansprüche, **dadurch gekennzeichnet, dass** der Einlasskanal einen Durchmesser hat, der mit dem Abstand zu dem Gebläse(3) zunimmt, so dass er sich von dem Gebläse (3) weg aufweitet.

6. Luftzirkulationssystem nach einem der vorangehenden Ansprüche, wobei die Zentrifugalgebläse-Einheit oder das Luftzirkulationssystem des Weiteren einen Luftfilter umfasst.

7. Luftzirkulationssystem nach einem der vorangehenden Ansprüche, das des Weiteren ein Gehäuse zum Aufnehmen der wenigstens einen Zentrifugalgebläse-Einheit umfasst, wobei das Luftzirkulationssystem insbesondere des Weiteren eine Wärmeaustausch-Einheit in dem Gehäuse vor dem Einlassteil umfasst.

8. Luftzirkulationssystem nach Anspruch 7, wobei das Gehäuse wenigstens einen Lufteinlass sowie wenigstens einen Luftauslass umfasst und der Lufteinlass funktional mit dem Einlassteil gekoppelt ist und der Luftauslass funktional mit dem Auslasskanal gekoppelt ist und wobei das Gehäuse Luft von dem Lufteinlass und dem Luftauslass trennt.

9. Luftzirkulationssystem nach Anspruch 7 oder 8, wobei das Gehäuse wenigstens zwei Zentrifugalgebläse-Einheiten in dem Gehäuse umfasst, um zwei getrennte Luftströme zu erzeugen die Wärme über die Wärmeaustausch-Einheit austauschen.

10. Luftzirkulationssystem nach einem der vorangehenden Ansprüche, wobei das Luftzirkulationssystem Teil eines Systems ist, das aus einem Belüftungssystem, einem Klimatisierungssystem, einem Lufterwärmungssystem, einem Luftkühlungssystem, einem Luftfilterungssystem sowie einer Kombination aus einem oder mehreren dieser Systeme ausgewählt wird.

## Revendications

1. Système de mouvement d'air comprenant au moins une unité de ventilateur centrifuge, dans lequel l'unité centrifuge comprend un ventilateur centrifuge (3) qui présente, lors du fonctionnement, un sens de rotation (R) et qui comprend des pales incurvées vers l'arrière par rapport audit sens de rotation (R) dudit ventilateur centrifuge (3) et avec ledit ventilateur centrifuge (3) couplé à une unité d'entraînement (15), une unité de commande (25) couplée de manière fonctionnelle à ladite unité d'entraînement (15), une pièce d'entrée formant une conduite d'entrée (10) axialement, plus particulièrement essentiellement coaxialement avec un axe de rotation (A) dudit ventilateur centrifuge (3), à l'unité de ventilateur centrifuge, cette conduite d'entrée (10) comprenant une extrémité qui fait face au ventilateur centrifuge (3) et une conduite de sortie (11) tangentiellement à l'unité de ventilateur centrifuge, la pièce d'entrée étant munie d'une première prise de pression (5) et d'une seconde prise de pression (4), la deuxième prise de pression (4) étant positionnée à une distance en amont de l'extrémité de la conduite d'entrée (10) qui fait face au ventilateur centrifuge (3) et ayant une ouverture (8), l'unité de commande (25) étant conçue pour mesurer une différence de pression entre la première et la deuxième prise de pression (5, 4) et pour commander le ventilateur centrifuge (3) en fonction de la différence de pression mesurée et la première prise de pression (5) ayant une ouverture (6) et ladite unité de commande (25) étant conçue pour maintenir un débit d'air réglé hors de ladite conduite de sortie (11) sur la base de ladite différence de pression mesurée en commandant la vitesse de rotation dudit ventilateur centrifuge (3), **caractérisé en ce que** ladite ouverture (8) de ladite deuxième prise de pression (4) est positionnée essentiellement dans une direction radiale par rapport à la conduite d'entrée (10), et ladite ouverture (6) de ladite première prise de pression (5) est positionnée à l'extrémité de la conduite d'entrée (10) qui fait face au ventilateur (3) au niveau ou à proximité d'une conduite d'entrée et qui s'ouvre dans la direction tangentielle par rapport au ventilateur (3).

2. Système de mouvement d'air selon la revendication 1, **caractérisé en ce que** ladite première prise de pression (5) comprend un tube (12) qui entre dans ladite pièce d'entrée et ladite ouverture (6) à l'extrémité de la conduite d'entrée qui fait face au ventilateur (3) est à une distance d'environ 0 à 5 mm d'une paroi de la conduite d'entrée (10), plus particulièrement ledit tube (12) ayant une partie d'extrémité qui présente une forme qui correspond au profil de l'extrémité de la conduite qui fait face au ventilateur (3) et débouchant dans ladite ouverture, plus particulièrement ladite partie d'extrémité étant incurvée afin de suivre la partie de la circonférence interne de ladite conduite d'entrée (10), plus particulièrement ladite partie d'extrémité étant à au moins plusieurs centimètres et étant pliée dans un tube supplémentaire qui mène hors de ladite conduite d'entrée (10), plus particulièrement dans la direction radiale hors de ladite conduite d'entrée, plus particulièrement ladite ouverture de la deuxième prise de pression étant positionnée à une distance d'environ 0 à 5 mm de ladite paroi de conduite d'entrée.

3. Système de mouvement d'air selon la revendication 2, **caractérisé en ce que** le tube, plus particulièrement ladite partie d'extrémité dudit tube, a son ouverture dans la direction du sens de rotation (R).

4. Système de mouvement d'air selon la revendication 2 ou 3, dans lequel le ventilateur centrifuge (3) a un axe de rotation (A), **caractérisé en ce que** l'ouverture (6) de ladite première prise de pression (5) a une section transversale qui globalement dans un plan traversant l'axe de rotation (A).

5. Système de mouvement d'air selon l'une des revendications précédentes, **caractérisé en ce que** ladite conduite d'entrée a un diamètre qui augmente avec la distance par rapport audit ventilateur (3) de façon à ce qu'elle s'évase en s'éloignant dudit ventilateur (3).

6. Système de mouvement d'air selon l'une des revendications précédentes, dans lequel l'unité de ventilateur centrifuge ou ledit système de mouvement d'air comprend en outre un filtre à air.

7. Système de mouvement d'air selon l'une des revendications précédentes, comprenant en outre un boîtier pour loger ladite au moins une unité de ventilateur centrifuge, plus particulièrement ledit système de mouvement d'air comprenant en outre une unité d'échange de chaleur dans ledit boîtier devant ladite pièce d'entrée.

8. Système de mouvement d'air selon la revendication 7, dans lequel ledit boîtier comprend au moins une entrée d'air et au moins une sortie d'air, ladite entrée d'air étant couplée de manière fonctionnelle à ladite pièce d'entrée et ladite sortie d'air étant couplée de manière fonctionnelle à ladite conduite de sortie, ledit boîtier séparant l'air provenant de ladite entrée d'air et de ladite sortie d'air.

9. Système de mouvement d'air selon la revendication 7 ou 8, dans lequel ledit boîtier comprend au moins deux unités de ventilateurs centrifuges dans ledit boîtier pour créer deux écoulements d'air séparés échangeant de la chaleur à travers ladite unité d'échange de chaleur.

10. Système de mouvement d'air selon l'une des revendications précédentes, dans lequel le système de mouvement d'air fait partie d'un système choisi parmi un système de ventilation, un système de climatisation, un système de chauffage d'air, un système de refroidissement d'air, un système de filtrage d'air et une combinaison d'un ou de plusieurs de ces systèmes.
